# DEMANDE DE BREVET EUROPEEN

(11) **EP 4 537 656 A1**
(43) Date de publication de la demande: **16.04.2025**
(21) Numéro de dépôt: 24206207.3
(22) Date de dépôt: 11.10.2024
(51) Int. Cl.: A01G 25/16, G05B 15/02

(54) **SYSTEME ET PROCÉDÉ DE PILOTAGE D'UNE INSTALLATION D'IRRIGATION D'UNE EXPLOITATION AGRICOLE**

(30) Priorité: 13.10.2023 FR 2311027
(71) Demandeur: Commissariat à l'Energie Atomique et aux Energies Alternatives, 75015 Paris (FR)
(72) Inventeur: ALOUI, Saifeddine, 38054 GRENOBLE CEDEX 09 (FR); PORTE, Florian, 38054 GRENOBLE CEDEX 09 (FR)
(74) Mandataire: Brevalex

(57) **Abrégé**

L'invention porte sur un procédé et un système de pilotage (3) d'une installation d'irrigation (1) d'une exploitation agricole (13), comportant un calculateur de pilotage (33) configuré pour interagir avec des dispositifs de mesure (5) et actionneurs (9) de ladite installation d'irrigation (1) à travers une IA conversationnelle peaufinée et alignée, dite IA conversationnelle courante (35), pour piloter l'irrigation de ladite exploitation agricole (13) en fonction des données transmises par les dispositifs de mesure (5) et en tenant compte des informations relatives à l'exploitation agricole et à l'installation d'irrigation.

## Description

### DOMAINE TECHNIQUE

La présente invention concerne le domaine d'irrigation d'une exploitation agricole et plus particulièrement, une irrigation automatique prenant en compte les propriétés des sols et les spécificités des cultures.

### ÉTAT DE LA TECHNIQUE ANTÉRIEURE

L'irrigation d'une exploitation agricole dépend de beaucoup de paramètres non tous mesurables. Un des paramètres le plus important est la mesure d'humidité du sol qui varie selon la profondeur.

Actuellement, il est connu des méthodes qui permettent de déclencher l'irrigation d'une exploitation agricole à partir de seuils d'hydrométries du sol.

Une de ces méthodes et la tensiométrie qui mesure une dépression correspondant à la force de succion que la racine doit exercer pour extraire l'eau disponible. Cette méthode est pertinente pour connaître la quantité d'eau disponible pour la plante mais nécessite plusieurs sondes par niveaux de lecture et des opérations de maintenance régulières pour obtenir une information fiable.

La technique la plus répandue pour mesurer l'humidité du sol est la mesure capacitive. Cette dernière est le plus souvent réalisée à partir d'une mesure de fréquence d'un oscillateur LC plongé dans le sol. On notera que la capacité dépend de la permittivité et n'est donc pas une mesure directe de l'humidité. La permittivité peut être reliée à l'humidité à travers des formules empiriques qui dépendent du milieu et de la fréquence de fonctionnement.

Toutefois, la technique de mesure capacitive souffre principalement de la difficulté de calibration liée à la multitude de paramètres d'influences. Ces paramètres d'influences comportent la diversité des textures du sol ; la variété d'interfaces liquide/air/solide selon les milieux; la conductivité du liquide interstitiel (ions dissouts) ; la température ; le tassement et l'homogénéité du milieu ; les fissures ; la présence et l'activité de matière organiques (par exemple, rhizosphère, mycélium, algues, vers de terres). L'estimation de ces facteurs est limitée par la connaissance de certains paramètres non mesurables, tels que par exemple la conductivité hydraulique à saturation du sol et la rugosité hydraulique de la surface parcellaire. La calibration dépend aussi de la fréquence de mesure et de la texture des sols: un appareil fonctionnant avec une fréquence élevée sera moins sensible à la conductivité mais aura un volume d'analyse plus réduit.

Ainsi, la calibration des capteurs capacitifs se révèle complexe, fastidieuse et spécifique à chaque type de sol. Il est possible de réduire l'influence de certains facteurs en fonction de la fréquence mais différents phénomènes de relaxation couvrent l'ensemble du spectre de fréquences.

Par ailleurs, pour un taux d'humidité donné, l'eau disponible pour les plantes n'est pas la même selon le type de sol. La plupart des capteurs capacitifs dans le commerce fonctionnent à des fréquences de l'ordre de 10 MHz à 100MHz. Ces hautes fréquences sont sensibles à l'eau absorbée par les grains que les plantes ne peuvent pas extraire et sont moins adaptées à mesurer l'eau capillaire disponible pour l'irrigation.

En outre, les conditions d'irrigation sont caractérisées par la dose et la durée d'irrigation en fonction du débit disponible ainsi que d'autres paramètres relatifs par exemple, à la spécificité du sol et sa capacité de stockage qui ont des impacts sur la croissance des plantes selon leur adaptation au milieu.

Cette multitude de paramètres d'influences ne permet d'avoir qu'une vision approximative du profil hydrique en comparaison avec les recommandations elles même génériques.

D'autres techniques d'irrigation utilisent des modèles empiriques basés sur des données météorologiques pour le pilotage des installations d'irrigation. Ces modèles sont essentiellement basés sur l'évapotranspiration qui dépend de la température, de la pression atmosphérique, de la luminosité, du vent, de l'humidité relative, la qualité de l'eau, la radiation solaire et le type de culture.

Ces modèles empiriques restent très limités et ne peuvent donner qu'une représentation statique et très partielle des conditions d'irrigation et de l'état de la culture.

Ainsi, l'objet de la présente invention est de remédier aux inconvénients précités en proposant un procédé et un système de pilotage automatique d'une installation d'irrigation simple à mettre en oeuvre, prenant en compte la spécificité du sol et de type de culture tout en étant compatible avec toutes les techniques de mesures et quel que soit les fréquences de mesure utilisées.

### EXPOSÉ DE L'INVENTION

L'invention a pour objet un système de pilotage d'une installation d'irrigation d'une exploitation agricole, comportant un calculateur de pilotage configuré pour interagir avec des dispositifs de mesure et actionneurs de ladite installation d'irrigation à travers une IA conversationnelle peaufinée et alignée, dite IA conversationnelle courante, pour piloter l'irrigation de ladite exploitation en fonction des données transmises par les dispositifs de mesure et en tenant compte des informations relatives à l'exploitation agricole et à l'installation d'irrigation.

Ceci permet un pilotage automatique et intelligent en optimisant les résultats (consommation en eau, volume et qualité de la récolte) selon les spécificités de l'exploitation agricole. En outre, ce système basé sur l'IA fonctionne quel que soit la fréquence de mesure des capteurs permettant d'utiliser des capteurs à faible consommation et à bas coût ne nécessitant pas une calibration complexe. L'lA apprend par elle-même à corriger et à compenser les erreurs des capteurs.

Avantageusement, le calculateur de pilotage est configuré pour déterminer un profil hydrique courant en fonction d'une évolution de la profondeur racinaire de plantes.

Ceci permet d'ajuster la quantité d'arrosage en fonction de la maturité de la culture qui évolue en fonction de la profondeur des racines.

Avantageusement, le calculateur de pilotage est configuré pour réaliser des apprentissages préliminaires sur une IA conversationnelle initiale, ledit calculateur de pilotage étant configuré pour :
- peaufiner l'IA conversationnelle initiale en lui fournissant des documents scientifiques relatifs à l'irrigation agricole produisant une IA conversationnelle peaufinée ayant des connaissances théoriques sur l'irrigation, et
- aligner l'IA conversationnelle peaufinée en lui fournissant des exemples de son fonctionnement réel produisant ladite IA conversationnelle courante ayant des connaissances réelles sur l'irrigation.

Ainsi, l'IA conversationnelle courante est une IA conversationnelle peaufinée et alignée pour l'irrigation de l'exploitation agricole.

Avantageusement, le calculateur de pilotage comporte :
- un module de conditionnement configuré pour conditionner l'IA conversationnelle courante en lui fournissant lesdites informations relatives à l'exploitation agricole et à l'installation d'irrigation, et
- un module d'interface configuré pour :
   - recevoir à chaque instant d'échantillonnage cadencé par une horloge, des données de mesure depuis les dispositifs de mesure,
   - transformer lesdites données de mesure reçues depuis les dispositifs de mesure en des données textuelles, et/ou en jetons, et/ou en plongement lexicaux,
   - renvoyer lesdites données textuelles et/ou jetons, et/ou plongement lexicaux vers l'IA conversationnelle courante qui est configurée pour analyser et prendre une décision de démarrer, de continuer ou d'arrêter l'irrigation, et
   - commander au moins un actionneur de l'installation d'irrigation selon la décision prise par l'IA conversationnelle courante.

Ainsi, l'IA conversationnelle courante évolue vers un modèle spécifiquement fait pour l'irrigation de l'exploitation agricole en question.

Avantageusement, lesdites informations relatives à l'exploitation agricole et à l'installation d'irrigation comportent le type de sol, la culture, et la surface de l'exploitation agricole, ainsi que les types de dispositifs de mesure, les types d'actionneurs, et le débit d'arrosage de l'installation d'irrigation.

Avantageusement, lesdites données de mesure comportent des mesures d'humidité sur plusieurs niveaux de sol, des mesures d'humidité de l'air, des mesures de la température, de luminosité, de vent, de profondeur racinaire, une estimation de la probabilité de précipitation, et un horodatage.

Avantageusement, le système de pilotage comporte une base de donnée de peaufinage. Le module d'interface est configuré pour horodater et enregistrer dans la base de donnée de peaufinage l'historique de ses interactions avec les dispositifs de mesure et actionneurs.

Ainsi, toute la discussion entre l'IA et les capteurs et actionneurs est loguée. Les capteurs donnent les mesures, l'IA donne le raisonnement et les décisions (par exemple, heure par heure).

Avantageusement, le calculateur de pilotage comporte un module d'annotation configuré pour annoter l'historique des interactions formant ainsi un log annoté dans la base de donnée de peaufinage.

L'annotation permet de détecter les mauvaises prises de décisions et changer le contenu de l'enregistrement afin de prendre une meilleure décision que celle qui a déjà été prise.

Avantageusement, le calculateur de pilotage est configuré pour recevoir des observations sur l'état des plantes et du sol de l'exploitation agricole et en ce que le module d'annotation est configuré pour annoter l'historique enregistré dans la base de donnée de peaufinage selon ledit état des plantes en fonction de leur maturité, et du sol.

Ainsi, l'état des plantes et du sol est un indicateur pertinent pour l'IA qui dispense de connaître précisément le taux d'humidité du sol.

Avantageusement, le calculateur de pilotage est configuré pour évaluer à postériori l'efficacité du pilotage d'irrigation en annotant un ensemble d'indicateurs de qualité comprenant le rendement et la qualité d'une récolte à l'issue de celle-ci.

Ceci permet d'optimiser l'irrigation tout en répondant à des critères de satisfaction de l'utilisateur.

Avantageusement, le calculateur de pilotage est configuré pour réaliser un calibrage des mesures issues des dispositifs de mesure par apprentissage continue en utilisant les observations sur l'état des plantes et du sol de l'exploitation agricole.

Ceci dispense d'une calibration complexe et coûteuse des capteurs capacitifs où la mesure capacitive n'est pas une mesure directe de l'humidité.

Avantageusement, le calculateur de pilotage est configuré pour peaufiner de manière continue l'IA conversationnelle courante en réinjectant le log annoté courant dans un processus d'apprentissage d'un modèle de langage LLM de type LoRA formant un modèle d'lA conversationnelle courante avec adaptateur LoRA.

Ainsi, grâce à cette technique, l'IA courante avec adaptateur LoRA continue à apprendre de ses expériences loguées et annotées. Initialement, l'IA a été entraînée de manière théoriques et sur quelques exemples pratiques et maintenant, grâce à LoRA, l'IA possède une connaissance approfondie et pratique sur le champ spécifique de l'exploitation agricole.

L'invention vise également une installation d'irrigation d'une exploitation agricole comportant le système de pilotage selon les caractéristiques précédentes, comportant en outre :
- un ensemble de dispositifs de mesure configurés pour faire des mesures sur les plantes, le sol, et l'air de l'exploitation agricole, et pour transmettre les mesures au système de pilotage, et
- un ensemble d'actionneurs configurés pour actionner ou arrêter l'irrigation selon la commande reçue depuis le système de pilotage.

Avantageusement, le dispositif de mesure comporte un tube en matériau isolant équipé de capteurs capacitifs de mesure d'humidité, un module d'alimentation, un module d'acquisition et de traitement et un module de communication.

Avantageusement, l'installation d'irrigation comporte un système d'observation comprenant des caméras configurées pour transmettre au système de pilotage des images et/ou observations sur l'état des plantes et du sol de l'exploitation agricole.

L'invention vise aussi un procédé de pilotage d'une installation d'irrigation d'une exploitation agricole, comportant une étape d'interaction avec des dispositifs de mesure et actionneurs de ladite installation d'irrigation à travers une IA conversationnelle peaufinée et alignée, dite IA conversationnelle courante, pour piloter l'irrigation de ladite exploitation en fonction des données transmises par les dispositifs de mesure et en tenant compte des informations relatives à l'exploitation agricole et à l'installation d'irrigation.

Avantageusement, le procédé comprend une première phase d'apprentissage comportant les étapes suivantes:
- peaufiner l'IA conversationnelle initiale en lui fournissant des documents scientifiques relatifs à l'irrigation agricole produisant une IA conversationnelle peaufinée ayant des connaissances théoriques sur l'irrigation, et
- aligner l'IA conversationnelle peaufinée en lui fournissant des exemples de son fonctionnement réel produisant ladite IA conversationnelle courante ayant des connaissances réelles sur l'irrigation.

Avantageusement, le procédé comprend une phase d'apprentissage comportant les étapes suivantes:
- conditionnement de l'IA conversationnelle courante en lui fournissant lesdites informations relatives à l'exploitation agricole et à l'installation d'irrigation,
- recevoir à chaque instant d'échantillonnage cadencé par une horloge, des données de mesure depuis les dispositifs de mesure,
- transformation desdites données de mesure reçues depuis les dispositifs de mesure en des données textuelles, , et/ou en jetons, et/ou en plongement lexicaux,
- renvoie desdites données textuelles, et/ou jetons, et/ou plongement lexicaux, vers l'IA conversationnelle courante qui est configurée pour analyser et prendre une décision de démarrer, de continuer ou d'arrêter l'irrigation, et
- commande d'au moins un actionneur de l'installation d'irrigation selon la décision prise par l'IA conversationnelle courante.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans lesquels :
La Fig. 1 illustre très schématiquement une installation d'irrigation d'une exploitation agricole, selon un mode de réalisation de l'invention ;
La Fig. 2 illustre très schématiquement un dispositif de mesure destiné à être utilisé dans l'exploitation agricole, selon un mode de réalisation de l'invention ; et
Les Fig. 3A, Fig. 3B, Fig. 3C , Fig. 3D et Fig. 3E illustrent très schématiquement en relation avec la Fig.1, les différentes phases d'interactions entre le calculateur de pilotage et l'intelligence artificielle conversationnelle du système de pilotage, selon un mode de réalisation préféré de l'invention.

### EXPOSÉ DÉTAILLÉ DE L'INVENTION

Le principe de l'invention est d'utiliser l'IA conversationnelle pour piloter l'irrigation d'une exploitation agricole de manière automatique en prenant en compte de manière continue les propriétés des sols, la spécificité des cultures et des observations sur les plantes.

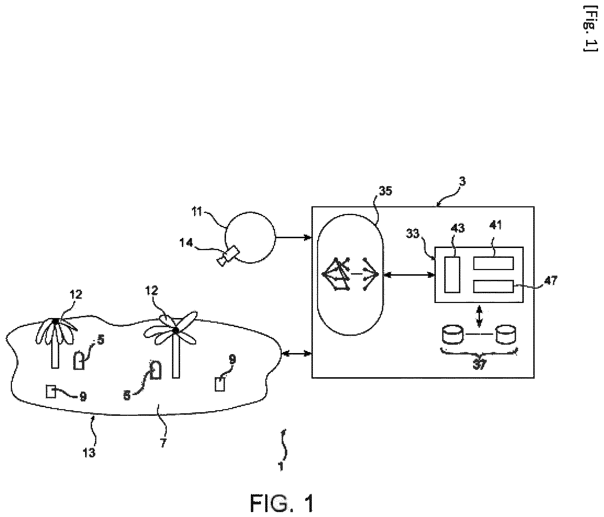

La Fig. 1 illustre très schématiquement une installation d'irrigation d'une exploitation agricole, selon un mode de réalisation de l'invention.

L'installation d'irrigation 1 comporte un système de pilotage 3, un ensemble de dispositifs de mesure 5 pour mesurer l'humidité du sol 7, un ensemble d'actionneurs 9 pour actionner le démarrage ou l'arrêt de l'irrigation et éventuellement, un système d'observation 11.

Les dispositifs de mesure 5 sont destinés à être partiellement enfoncés dans le sol 7 de l'exploitation agricole afin de mesurer l'humidité du sol en fonction de la profondeur. Les dispositifs de mesure 5 sont également configurés pour faire des mesures sur les plantes 12, le sol 7, et l'air de l'exploitation agricole 13 et pour transmettre toutes les mesures au système de pilotage 3.

Le système d'observation 11 comporte des caméras 14 et/ou capteurs d'observation pour prendre des images et/ou observations sur l'état des plantes 12 et du sol 7 de l'exploitation agricole 13. Le système d'observation 11 peut aussi comporter une IA adaptée pour identifier le stress hydrique des plantes ou les signes de saturation sur les images prises par les caméras 14. Par exemple, le stress hydrique peut être identifié par le flétrissement des plantes et les signes de saturation en eau peut être identifié par des flaques d'eau dans les champs.

Les caméras 14 et/ou capteurs d'observation peuvent être installés dans différents endroits de l'exploitation agricole 13. En variantes, des drones comprenant des caméras et/ou capteurs d'observation peuvent aussi être utilisés pour surveiller l'évolution de l'exploitation agricole.

Le système d'observation 11 basé sur des caméras 14 et une IA adaptée est ainsi adapté pour transmettre au système de pilotage 3 des images et/ou observations sur l'état de l'exploitation agricole 13.

On notera qu'une première source d'observation est avantageusement l'agriculteur qui peut renseigner le système de pilotage 3 sur l'état de son exploitation. Dans ce cas, le système d'observation 11 peut venir en complément des observations directes faites par l'agriculteur.

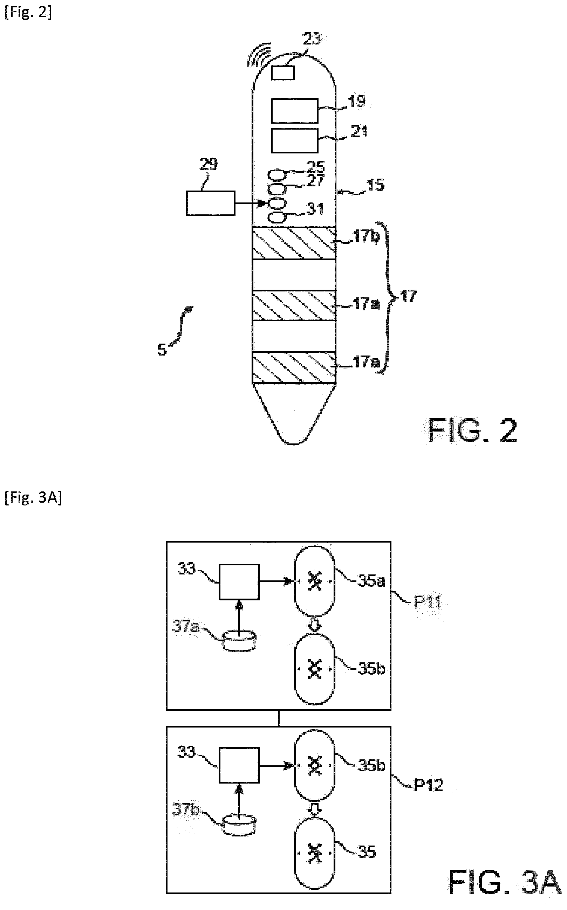

La Fig. 2 illustre très schématiquement un dispositif de mesure destiné à être utilisé dans l'exploitation agricole, selon un mode de réalisation de l'invention.

Selon ce mode de réalisation, le dispositif de mesure 5 comporte un tube 15 en matériau isolant équipé de capteurs de mesure 17 d'humidité, un module d'alimentation 19, un module d'acquisition et de traitement 21 et un module de communication 23.

Le matériau isolant du tube 15 peut être en PVC, PET, polycarbonate, verre, céramique, etc. La longueur du tube 15 dépends de la profondeur du réseau racinaire de la plante. Le nombre de capteurs 17 dépend de la longueur du tube 15 et donc également de la profondeur des racines de la plante.

Chaque capteur 17 de mesure d'humidité est avantageusement un capteur capacitif comportant un circuit électrique résonant dont la fréquence de résonance est représentative d'une mesure de permittivité qui est transformée via des formules empiriques en une mesure de l'humidité du sol.

Le circuit électrique résonant est un circuit inductif-capacitif comprenant une réactance active associée à un élément de couplage passif correspondant. La réactance active est par exemple une paire d'armatures métalliques et l'élément de couplage passif est un élément inductif. La géométrie et configuration des armatures métalliques peuvent être optimisées selon la gamme de mesure et la précision souhaitée. Un exemple de capteur capacitif est décrit dans la demande de brevet FR3115111.

Avantageusement, le tube 15 en matériau isolant est équipé de différents types de capteurs 17 capacitifs comportant des circuits électriques résonants à différentes fréquences, adaptés pour différents types de cultures et différentes sensibilités.

Eventuellement, le dispositif de mesure 5 peut comporter ou être associé à d'autres capteurs ou sondes comportant un capteur de température 25, un capteur de mesure de la conductivité 27, une station météo 29, un horodateur 31, etc.

Les capteurs de température et conductivité sont avantageusement répartis tout au long de la sonde à chaque niveau de mesure d'humidité dans l'objectif de fusionner ces mesures car elles sont interdépendantes.

Avantageusement, le module d'alimentation 19 comporte un moyen autonome de récupération d'énergie comme par exemple un panneau photovoltaïque ou une micro turbine. En variante, il peut comporter de simples piles électriques.

Le module d'acquisition et de traitement 21 est par exemple un microcontrôleur à basse consommation avec une mise en veille. Le microcontrôleur 21 est configuré pour extraire les mesures et données des différents capteurs 17, 25, 27, 29, 31 afin de déterminer des mesures de l'humidité du sol en fonction de la profondeur, des mesures de gradients d'humidité et de température en fonction de la profondeur, des données météo, etc.

Le module de communication 23 est configuré pour communiquer les résultats issus du module d'acquisition et de traitement 21 avec ou sans fils au système de pilotage 3.

Conformément à l'invention, le système de pilotage 3 comporte un calculateur de pilotage 33 configuré pour interagir avec les dispositifs de mesure 5 et actionneurs 9 à travers une intelligence artificielle « IA » conversationnelle peaufinée et alignée, dite IA conversationnelle courante 35. Le calculateur de pilotage 33 est configuré pour automatiquement piloter l'irrigation de l'exploitation agricole 13 en fonction des données transmises par les dispositifs de mesure 5 et en tenant compte des informations relatives à l'exploitation agricole 13 et à l'installation d'irrigation 1.

Le pilotage de l'irrigation par le calculateur de pilotage 33 comporte la détermination du profil hydrique courant optimal en fonction de l'évolution de la profondeur racinaire des plantes. En effet la profondeur racinaire évolue avec sa maturité impliquant une évolution du profil hydrique optimal. On notera que les données relatives à l'évolution de la profondeur racinaire des plantes sont propres à chaque culture, elles peuvent être trouvées dans la littérature ou en pratique par prélèvement.

Le système de pilotage 3 comporte en outre des bases de données 37 comportant différentes données relatives à des informations générales sur l'irrigation agricole, des informations sur l'exploitation agricole 13 spécifique, des exemples réels de fonctionnement de l'installation d'irrigation 1, des données de peaufinage relatives à l'historique des interactions de l'IA conversationnelle courante 35 avec les dispositifs de mesure 5 et actionneurs 9, etc.

Grâce à l'apprentissage continue de l'IA conversationnelle courante 35 utilisant notamment les informations et observations relatives à l'exploitation agricole 13 et à l'installation d'irrigation 1, le calculateur de pilotage 33 est configuré pour réaliser un calibrage des mesures issues des dispositifs de mesure 5. On peut ainsi, se mettre à une fréquence de fonctionnement la plus adaptée aux spécificités de la culture. Ceci dispense d'une calibration complexe et coûteuse des capteurs 17 capacitifs où la mesure capacitive est liée à une multitude de paramètres d'influences non mesurable directement.

En outre, le traitement basé sur l'IA conversationnelle fonctionne quel que soit la fréquence de mesure. Par exemple, l'acquisition des mesures peut être réalisée à des faibles fréquences augmentant ainsi la sensibilité à l'eau disponible pour les plantes tout en augmentant le volume de mesures par le capteur.

Par ailleurs, grâce à l'apprentissage continue de l'IA conversationnelle courante, le dispositif de mesure peut être équipé des premiers 17a et deuxièmes 17b types de capteurs capacitifs. Les premiers capteurs capacitifs 17a comportent des circuits électriques résonants à haute fréquence par exemple, supérieure à environ 30MHz afin de réduire l'impact de la conductivité et de la texture des sols des grandes cultures. Les deuxièmes capteurs capacitifs 17b comportent des circuits électriques résonants à basse fréquence par exemple entre 0,1 MHz et 10 MHz pour être plus sensible à la conductivité et à la texture des sols qui sont des facteurs de la disponibilité des nutriments et de l'eau dans les sols. Ainsi, quel que soit la fréquence de mesure, l'IA conversationnelle courant 35 permet de calibrer les mesures issues des dispositifs de mesure 5 de sorte qu'elles soient indicatives des taux d'humidité du sol.

On notera que le système de pilotage 3 peut être disposé localement dans l'exploitation agricole. En variante, un agriculteur gérant de l'exploitation agricole peut se connecter sur un système de pilotage déporté chez un prestataire du service ou sur une cloud.

Les Figs. 3A-3E illustrent très schématiquement en relation avec la Fig.1, les différentes phases d'interactions entre le calculateur de pilotage 33 et l'intelligence artificielle conversationnelle 35 du système de pilotage 3, selon un mode de réalisation préféré de l'invention.

La Fig. 3A est une première phase lors de laquelle le calculateur de pilotage 33 est configuré pour réaliser des apprentissages préliminaires sur une IA conversationnelle initiale 35a. Avantageusement, l'IA conversationnelle initiale 35a est une IA conversationnelle pré-entrainée.

A l'étape P11, le calculateur de pilotage 33 est configuré pour peaufiner l'IA conversationnelle initiale 35a en lui fournissant des documents scientifiques relatifs à l'irrigation agricole depuis une première base de données 37a, produisant ainsi une IA conversationnelle peaufinée 35b. Le peaufinage (fine-tuning) permet au modèle de l'IA conversationnelle d'acquérir des connaissances préliminaires théoriques sur l'irrigation.

A l'étape P12, le calculateur de pilotage 33 est configuré pour aligner l'IA conversationnelle peaufinée 35b en lui fournissant depuis une deuxième base de données 37b des exemples de son fonctionnement réel comportant des interactions réelles prédéterminées avec les dispositifs de mesure 5 et actionneurs 9 de l'installation d'irrigation 1. Cet alignement produit une IA conversationnelle peaufinée et alignée, dite l'IA conversationnelle courante 35. L'alignement permet de forcer le modèle de l'IA à se comporter selon des exemples concrets de fonctionnement.

Cette première phase permet ainsi à l'IA conversationnelle courante 35 de débuter le pilotage d'irrigation en appliquant les connaissances initiales. Ensuite, lors des phases suivantes l'IA conversationnelle courante 35 apprendra au fur et à mesure les conséquences de ses propres tâches.

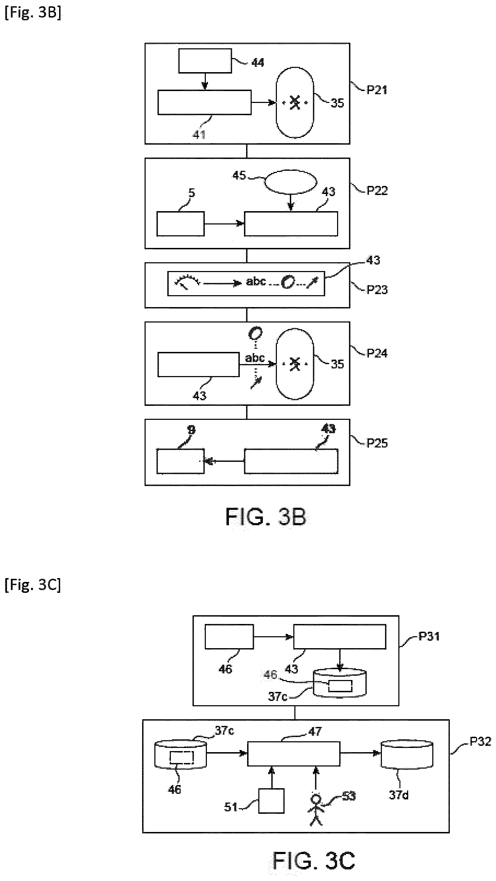

La Fig. 3B est une deuxième phase lors de laquelle le calculateur de pilotage 33 est configuré pour faire évoluer l'IA conversationnelle courante 35 vers un modèle spécifiquement fait pour l'irrigation de l'exploitation agricole 13 en question.

En effet, le calculateur de pilotage 33 comporte un module de conditionnement 41 et un module d'interface 43 configurés pour réalisées les étapes P21-P25. Le module d'interface 43 est par exemple une application destinée à communiquer avec l'IA conversationnelle courante 35 et avec les dispositifs de mesure 5 et actionneurs 9.

A l'étape P21, le module de conditionnement 41 est configuré pour conditionner l'IA conversationnelle courante 35 en lui fournissant les informations 44 relatives à l'exploitation agricole et à l'installation d'irrigation. Les informations relatives à l'exploitation agricole 13 comportent le type de sol (argileux, sableux,...), la culture (maïs, tourne sol,...), la maturité de la culture, et la surface de l'exploitation agricole. Les informations relatives à l'installation d'irrigation 1 comportent les types de capteurs intégrés aux dispositifs de mesure 5, les types d'actionneurs 9, et le débit d'arrosage de l'installation d'irrigation selon par exemple la maturité de la culture, etc. Ainsi, le conditionnement est un ensemble de données permettant à l'IA conversationnelle courante 35 d'avoir une information sur la tache en cours.

En outre, lors des étapes P22-P25, le module d'interface 43 permet l'interaction à travers l'IA conversationnelle courante 35 avec les dispositifs de mesure 5 et actionneurs 9. Il permet également l'horodatage et l'enregistrement de ces interactions.

Plus particulièrement, à l'étape P22, le module d'interface 43 est configuré pour recevoir à chaque instant d'échantillonnage cadencé par une horloge 45, des données de mesure depuis les dispositifs de mesure 5. Ces données de mesure comportent des mesures d'humidité sur plusieurs niveaux de sol, des mesures d'humidité de l'air, des mesures de la température, de luminosité, de vent, de profondeur racinaire, une estimation de la probabilité de précipitation (par exemple dans les 24 heures), et un horodatage (i.e. l'heure de la journée et la période de l'année).

A l'étape P23, le module d'interface 43 est configuré pour transformer les données de mesure reçues depuis les dispositifs de mesure 5 en des données textuelles et/ou en jetons (tokens, en anglais) et/ou en plongement lexical (word embedding, en anglais).

Ainsi, selon un premier mode particulier de réalisation, les données de mesure sont transformées en données textuelles comportant des chaînes de caractères représentatives des données de mesure et renseignant sur l'état actuel des dispositifs de mesure 5.

Selon une première variante, les données de mesure sont transformées en jetons comportant des symboles correspondant à des identifiants directement interprétables par l'IA conversationnelle courante.

Selon une deuxième variante, les données de mesure sont transformées en un plongement lexical selon une vectorisation de données dans un espace vectoriel latent du modèle. Cette technique de représentation abstraite permet de diminuer la dimension de la représentation des mots, facilitant ainsi l'apprentissage. Des plongement lexicaux en provenance de plusieurs dispositifs de mesure peuvent être hybridés en entraînant une couche d'adaptation. Ceci permet de doter le modèle de l'IA conversationnelle courante d'un 'sens' lui permettant de 'comprendre' directement ce qu'il 'voit', ce qu'il 'entends', et ce qu'il 'ressent' (température, humidité ...).

A l'étape P24, le module d'interface 43 est configuré pour renvoyer les données textuelles, et/ou jetons et/ou plongement lexicaux vers l'IA conversationnelle courante 35. Cette dernière est configurée pour analyser et prendre une décision de démarrer, de continuer ou d'arrêter l'irrigation.

A l'étape P25, le module d'interface 43 est configuré pour commander au moins un actionneur 9 de l'installation d'irrigation selon la décision prise par l'IA conversationnelle courante à l'étape P24.

On notera que des gardes fou peuvent être implémenter pour cette deuxième phase afin de diminuer le risque de mauvaises décisions.

La Fig. 3C est une troisième phase destinée à préparer une base de données de peaufinage.

En effet, le calculateur de pilotage 33 comporte en outre un module d'annotation 47 en plus des modules de conditionnement 41 et d'interface 43. Lors de cette troisième phase, le calculateur de pilotage 33 utilise les modules d'interface 43 et d'annotation 47 pour préparer la base de données de peaufinage.

A l'étape P31, le module d'interface 43 est configuré pour horodater et loguer ou enregistrer l'historique 46 de ses interactions avec les dispositifs de mesure 5 et actionneurs 9 à travers l'IA conversationnelle courante 35 dans une base de donnée 37c. L'historique 46 comprend le raisonnement et les décisions prises par l'IA conversationnelle courante 35 par exemple, heure par heure.

A l'étape P32, le module d'annotation 47 est configuré pour annoter l'historique 46 des interactions enregistrées dans la base de donnée 37c formant ainsi une base de donnée de peaufinage 37d, dite aussi 'log annoté'. Plus particulièrement, l'état des plantes et/ou du sol de l'exploitation agricole peut être annoté par un agriculteur 53 ou opérateur de cette exploitation. L'agriculteur 53 peut éventuellement réannoter ce qui a été annoté précédemment.

Par ailleurs, le module d'annotation 47 est configuré pour utiliser des informations 51 sur l'état des plantes et/ou du sol issues des images et/ou observations du système d'observation 11 pour annoter l'historique 46 des interactions enregistrées dans la base de donnée 37c.

L'annotation vise à détecter les mauvaises prises de décisions et changer le contenu de l'enregistrement ou de tout simplement indiquer que le résultat d'une prise de décision n'était pas bon afin de permettre à l'IA conversationnelle courant 35 de progresser en prenant des meilleures décisions que celles prises précédemment.

Avantageusement, l'annotation permet également d'ajuster la quantité d'arrosage en fonction de la maturité de la culture.

l'IA conversationnelle courant 35 peut ainsi apprendre par elle-même en regardant les différences entre les objectifs et la réalité. Au bout de quelques expériences, l'IA conversationnelle courant 35 découvre les bonnes prises de décisions. Ceci peut ensuite être ajouté de manière permanente au peaufinage de l'IA conversationnelle courant.

Au fur et à mesure, l'IA conversationnelle courante constate les effets de ses décisions sur les plantes de l'exploitation agricole. Par exemple, si l'IA conversationnelle courante constate que les plantes sont en stress hydrique, elle peut conclure que son dernier raisonnement n'était pas bon. Ainsi, l'IA conversationnelle courante peut prendre connaissance des conséquences de ses fautes ce qui lui permet d'apprendre et d'améliorer son raisonnement et ses décisions futurs.

Ainsi, l'état des plantes et du sol est utilisé ici comme un indicateur du stress hydrique ou de sur-irrigation soit à travers l'observation de l'agriculteur 53, soit au moyen des caméras 14. Ceci permet de se dispenser de connaître précisément le taux d'humidité du sol sachant que ce dernier paramètre n'est pas un indicateur pertinent à lui tout seul, parce que pour un type de sol avec un profil d'hydrométrie donné, la capacité des plantes à absorber l'humidité n'est pas la même.

Toutes ces observations et annotations sur l'état des plantes et du sol permet à l'IA conversationnelle courante 35 d'améliorer davantage le calibrage des mesures issues des dispositifs de mesure 5.

Avantageusement, le calculateur de pilotage 33 est configuré pour évaluer à postériori l'efficacité du pilotage d'irrigation en annotant un ensemble d'indicateurs de qualité. L'ensemble d'indicateurs de qualité comprend le rendement (par exemple, la consomation en eau, le poids de la récolte, la durée de la culture, les maladies, etc.) et la qualité (par exemple, la qualité gustative) d'une récolte à l'issue de celle-ci.

Dans ce cas, le système de pilotage est configuré pour prendre en compte ces annotations en ajustant les parramètres initiaux lors d'une prochaine culture pour répondre à des critères de satisfaction de l'utilisateur.

On notera que l'utilisateur peut atribuer un poids à chaque indicateur de qualité en fonction de l'importance qu'il donne à chacun de ces critères. Par exemple, la vitesse de croissance peut être moins importante que la qualité selon les priorités de l'agriculteur. Au fur et a mesure des récoltes l'agriculteur peut par exemple chercher à réduire sa consomation d'eau tout en améliorant le volume de la récolte et sa qualité. Dans ce cas, des poids forts sont affectés a ces trois critères pour identifier quels sont les profils hydriques les plus favorable à chaque phase de développement de la culture.

Le profil hydrique peut être modifié par la durée et la fréquence des arrosage sachant que si on arrose longtemps et moins souvent l'humidité sera plus importante en profondeur que si on arrose peu et souvent.

L'adaptation du profil hydrique au besoin de la plante tout au long de sa croissance permet d'optimiser la consomation d'eau tout en assurant la quantité et la qualité de la récolte. Ainsi, les retour d'expériences des récoltes passées permet de converger vers le profil hydrique optimal pour chaque phase de croissance.

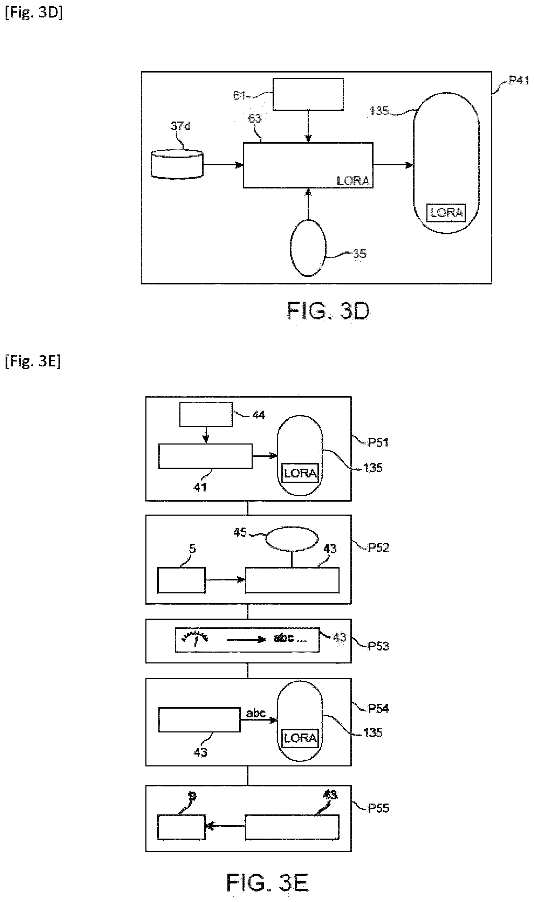

La Fig. 3D est une quatrième phase destinée à utiliser la technique de modèle de langage LLM (Large Language Model) pour réaliser un peaufinage continue supplémentaire.

A l'étape P41, le calculateur de pilotage 33 est configuré pour peaufiner de manière continue l'IA conversationnelle courante 35 en réinjectant le log annoté courant 37d dans un processus d'apprentissage d'un modèle de langage LLM de type LoRA (Low Rank Adaptation). On notera que LoRA est une technique de peaufinage rapide à moindre ressources permettant de bloquer tout le réseau du modèle sauf quelques zones. C'est-à-dire, il y' a des couches qui vont être laissées libres permettant à l'IA conversationnelle courante de ne pas oublier ce qu'elle a apprise précédemment.

Cette étape P41 est une boucle lors de laquelle le log annoté dans la base de données 37d qui contient que les bonnes décisions ou bien des décisions corrigées est réinjecté par le calculateur de pilotage 33 dans un processus d'apprentissage de type LoRA pour peaufiner l'IA conversationnelle courante 35. Ce peaufinage de l'IA conversationnelle courante 35 consiste à prendre la « précédente version du modèle LoRA » 61 et à faire un apprentissage sur les données cumulées « LoRA fine tuning » 63 pour produire un nouveau « modèle de l'IA conversationnelle courante » comportant une composante LoRA, dite « IA conversationnelle courante avec adaptateur LoRA » 135. Cette même boucle est répétée jusqu'à la convergence de l'IA conversationnelle courante. On notera qu'à chaque itération, certaines couches de l'IA conversationnelle courante avec adaptateur LoRA 135 seront modifiées pour tenir compte des nouvelles informations ou expériences. L'adaptateur IoRA peut être avantageusement fusionné au modèle de l'IA conversationnelle courante.

Le peaufinage continue permet ainsi de réaliser des apprentissage plus légers en utilisant le log annoté depuis le début afin de mettre à jour le modèle de l'IA. En utilisant la technique LoRA, ce type de peaufinage permet de mettre à jour uniquement quelques portions ou couches LoRA du modèle de l'IA conversationnelle courante avec adaptateur LoRA 135 et est donc beaucoup moins gourmande en termes de puissance de calcul requise.

Avec cette technique, l'IA conversationnelle courante avec adaptateur LoRA 135 continue à apprendre de ses expériences et devrait converger vers un modèle d'lA très spécialiste de l'exploitation agricole en question.

La fréquence de peaufinage continue peut être fonction des mauvaises décisions. Tant que l'IA conversationnelle courante avec adaptateur LoRA 135 prends les bonnes décisions, il n'est pas nécessaire de peaufiner davantage.

A titre d'exemple, cette quatrième phase peut être réalisée sur un serveur d'un fournisseur. En variante, elle peut aussi être réalisée en local dans l'exploitation agricole.

La Fig. 3E est une cinquième phase destinée à utiliser l'IA conversationnelle courante avec adaptateur LoRA pour mieux gérer l'irrigation des exploitations agricoles.

Cette cinquième phase est identique à la deuxième phase de la Fig. 3B, sauf que c'est l'IA conversationnelle courante avec adaptateur LoRA 135 qui est utilisée pour l'exploitation de l'agriculteur.

Ainsi, à l'étape P51, le module de conditionnement 41 est configuré pour conditionner l'IA conversationnelle courante avec adaptateur LoRA 135 en lui fournissant les informations relatives à l'exploitation agricole et à l'installation d'irrigation.

A l'étape P52, le module d'interface 43 est configuré pour recevoir à chaque instant d'échantillonnage cadencé par l'horloge 45, des données de mesure depuis les dispositifs de mesure 5.

A l'étape P53, le module d'interface 43 est configuré pour transformer les données de mesure reçues depuis les dispositifs de mesure 5 en des données textuelles et/ou en jetons et/ou en plongement lexicaux.

A l'étape P54, le module d'interface 43 est configuré pour renvoyer les données textuelles, et/ou les jetons et/ou les plongement lexicaux vers l'IA conversationnelle courante avec adaptateur LoRA 135. Cette dernière est configurée pour analyser et prendre une décision de démarrer, de continuer ou d'arrêter l'irrigation.

A l'étape P55, le module d'interface 43 est configuré pour commander au moins un actionneur 9 de l'installation d'irrigation selon la décision prise par l'IA conversationnelle courante avec adaptateur LoRA 135 à l'étape P54.

Ainsi, on continue à accumuler les enregistrements qui pourront éventuellement servir à alimenter des IA similaires pour d'autres exploitations. Ceci permet à l'IA d'apprendre à s'adapter au changement climatique et à mieux gérer l'exploitation.

Avantageusement, le procédé ou système de pilotage peut être appliqué sur plusieurs cultures consécutives pour récupérer les modèles de langage des apprentissages successives afin d'évaluer à postériori l'efficacité du pilotage d'irrigation.

Ce procédé ou système de pilotage peut aussi être appliqué sur plusieurs cultures en parallèle pour récupérer les modèles de langage des différentes apprentissages. Ceci permet de créer une IA conversationnelle générique qui peut facilement s'adapter à une nouvelle exploitation agricole.

Le système de pilotage selon l'invention est très simple à mettre en oeuvre tout en étant compatible à tous types de cultures, de sols, de méthode de mesures ou d'irrigation. Il prend en compte les connaissances du cultivateur, la spécificité du sol et du type de culture. Il permet de se passer d'un calibrage complexe des capteurs capacitifs en tenant compte des indicateurs issus des plantes et du sol. En outre, le système de pilotage est compatible avec des sondes et capteurs de faible consommation.

Bien entendu, diverses modifications peuvent être apportées par l'homme du métier à l'invention qui vient d'être décrite, uniquement à titre d'exemples non limitatifs.

## Revendications

1. Système de pilotage d'une installation d'irrigation d'une exploitation agricole, **caractérisé en ce qu'**il comporte un calculateur de pilotage (33) configuré pour :
- interagir avec des dispositifs de mesure (5) et actionneurs (9) de ladite installation d'irrigation (1) à travers une IA conversationnelle peaufinée et alignée, dite IA conversationnelle courante (35), et
- piloter l'irrigation de ladite exploitation agricole (13) en fonction des données transmises par les dispositifs de mesure (5) et en tenant compte des informations relatives à l'exploitation agricole et à l'installation d'irrigation.

2. Système de pilotage selon la revendication 1, **caractérisé en ce que** le calculateur de pilotage (33) est configuré pour déterminer un profil hydrique courant en fonction d'une évolution de la profondeur racinaire de plantes.

3. Système de pilotage selon la revendication 1 ou 2, **caractérisé en ce que** le calculateur de pilotage (33) est configuré pour réaliser des apprentissages préliminaires sur l'IA conversationnelle initiale, ledit calculateur de pilotage étant configuré pour :
- peaufiner l'IA conversationnelle initiale en lui fournissant des documents scientifiques relatifs à l'irrigation agricole produisant une IA conversationnelle peaufinée ayant des connaissances théoriques sur l'irrigation, et
- aligner l'IA conversationnelle peaufinée en lui fournissant des exemples de son fonctionnement réel produisant ladite IA conversationnelle courante (35) ayant des connaissances réelles sur l'irrigation.

4. Système de pilotage selon l'une quelconque des revendications 1 à 3, **caractérisé en ce que** le calculateur de pilotage (33) comporte :
- un module de conditionnement (41) configuré pour conditionner l'IA conversationnelle courante (35) en lui fournissant lesdites informations relatives à l'exploitation agricole (13) et à l'installation d'irrigation, et
- un module d'interface (43) configuré pour :
- recevoir à chaque instant d'échantillonnage cadencé par une horloge (45), des données de mesure depuis les dispositifs de mesure (5),
- transformer lesdites données de mesure reçues depuis les dispositifs de mesure (5) en des données textuelles, et/ou en jetons, et/ou en plongement lexicaux,
- renvoyer lesdites données textuelles, et/ou lesdits jetons, et/ou lesdits plongement lexicaux vers l'IA conversationnelle courante (35) qui est configurée pour analyser et prendre une décision de démarrer, de continuer ou d'arrêter l'irrigation, et
- commander au moins un actionneur (9) de l'installation d'irrigation selon la décision prise par l'IA conversationnelle courante.

5. Système de pilotage selon la revendication 4, **caractérisé en ce que** lesdites informations relatives à l'exploitation agricole (13) et à l'installation d'irrigation comportent le type de sol, la culture, et la surface de l'exploitation agricole, ainsi que les types de dispositifs de mesure, les types d'actionneurs, et le débit d'arrosage de l'installation d'irrigation.

6. Système de pilotage selon la revendication 4, **caractérisé en ce que** lesdites données de mesure comportent des mesures d'humidité sur plusieurs niveaux de sol, des mesures d'humidité de l'air, des mesures de la température, de luminosité, de vent, de profondeur racinaire, une estimation de la probabilité de précipitation, et un horodatage.

7. Système de pilotage selon l'une quelconque des revendications 4 à 6, **caractérisé en ce qu'**il comporte une base de donnée de peaufinage, et **en ce que** le module d'interface (35) est configuré pour horodater et enregistrer dans la base de donnée de peaufinage l'historique de ses interactions avec les dispositifs de mesure et actionneurs.

8. Système de pilotage selon la revendication 7, **caractérisé en ce qu'**il comporte un module d'annotation (47) configuré pour annoter l'historique des interactions formant ainsi un log annoté dans la base de donnée de peaufinage.

9. Système de pilotage selon la revendication 8, **caractérisé en ce que** le calculateur de pilotage (33) est configuré pour recevoir des observations sur l'état des plantes et du sol de l'exploitation agricole et **en ce que** le module d'annotation (47) est configuré pour annoter l'historique enregistré dans la base de donnée de peaufinage selon ledit état des plantes en fonction de leur maturité, et du sol.

10. Système de pilotage selon la revendication 8 ou 9, **caractérisé en ce que** le calculateur de pilotage (33) est configuré pour évaluer à postériori l'efficacité du pilotage d'irrigation en annotant un ensemble d'indicateurs de qualité comprenant le rendement et la qualité d'une récolte à l'issue de celle-ci.

11. Système de pilotage selon la revendication 9 ou 10, **caractérisé en ce que** le calculateur de pilotage (33) est configuré pour réaliser un calibrage des mesures issues des dispositifs de mesure (5) par apprentissage continue en utilisant les observations sur l'état des plantes et du sol de l'exploitation agricole.

12. Système de pilotage selon l'une quelconque des revendications 8 à 11, **caractérisé en ce que** le calculateur de pilotage (33) est configuré pour peaufiner de manière continue l'IA conversationnelle courante en réinjectant le log annoté courant dans un processus d'apprentissage d'un modèle de langage LLM de type LoRA formant un modèle d'lA conversationnelle courante avec adaptateur LoRA (135).

13. Installation d'irrigation d'une exploitation agricole comportant le système de pilotage selon l'une quelconque des revendications précédentes, **caractérisé en ce qu'**il comporte en outre :
- un ensemble de dispositifs de mesure (5) configurés pour faire des mesures sur les plantes, le sol, et l'air de l'exploitation agricole (13), et pour transmettre les mesures au système de pilotage (3), et
- un ensemble d'actionneurs (9) configurés pour actionner ou arrêter l'irrigation selon la commande reçue depuis le système de pilotage.

14. Installation d'irrigation selon la revendication 13, **caractérisé en ce qu'**un dispositif de mesure (5) comporte un tube (15) en matériau isolant équipé de capteurs capacitifs (17a, 17b) de mesure d'humidité, un module d'alimentation (19), un module d'acquisition et de traitement (21) et un module de communication (23).

15. Installation d'irrigation selon la revendication 13 ou 14, **caractérisé en ce qu'**il comporte un système d'observation (11) comprenant des caméras (14) configurées pour transmettre au système de pilotage (3) des images et/ou observations sur l'état des plantes et du sol de l'exploitation agricole.

16. Procédé de pilotage d'une installation d'irrigation d'une exploitation agricole, **caractérisé en ce qu'**il comporte les étapes suivantes :
- interagir avec des dispositifs de mesure (5) et actionneurs (9) de ladite installation d'irrigation (1) à travers une IA conversationnelle peaufinée et alignée, dite IA conversationnelle courante (35), et
- piloter l'irrigation de ladite exploitation en fonction des données transmises par les dispositifs de mesure et en tenant compte des informations relatives à l'exploitation agricole et à l'installation d'irrigation.

17. Procédé de pilotage selon la revendication 16, **caractérisé en ce qu'**il comprend une première phase d'apprentissage comportant les étapes suivantes:
- peaufiner une IA conversationnelle initiale en lui fournissant des documents scientifiques relatifs à l'irrigation agricole produisant une IA conversationnelle peaufinée ayant des connaissances théoriques sur l'irrigation, et
- aligner l'IA conversationnelle peaufinée en lui fournissant des exemples de son fonctionnement réel produisant ladite IA conversationnelle courante ayant des connaissances réelles sur l'irrigation.

18. Procédé de pilotage selon la revendication 16, **caractérisé en ce qu'**il comprend une phase d'apprentissage comportant les étapes suivantes:
- conditionnement de l'IA conversationnelle courante en lui fournissant lesdites informations relatives à l'exploitation agricole et à l'installation d'irrigation,
- recevoir à chaque instant d'échantillonnage cadencé par une horloge, des données de mesure depuis les dispositifs de mesure,
- transformation desdites données de mesure reçues depuis les dispositifs de mesure en des données textuelles, et/ou en jetons, et/ou en plongement lexicaux,
- renvoie desdites données textuelles, et/ou jetons, et/ou plongement lexicaux, vers l'IA conversationnelle courante qui est configurée pour analyser et prendre une décision de démarrer, de continuer ou d'arrêter l'irrigation, et
- commande d'au moins un actionneur de l'installation d'irrigation selon la décision prise par l'IA conversationnelle courante.
